# FASCICULE DE BREVET EUROPEEN

(11) **EP 3 265 697 B1**
(45) Date de publication et mention de la délivrance du brevet: **15.05.2019**
(21) Numéro de dépôt: 16700828.3
(22) Date de dépôt: 18.01.2016
(51) Int. Cl.: F16H 53/08, B60H 1/00

(54) **DISPOSITIF A CAME POUR LA COMMANDE D'AU MOINS UN ORGANE**
NOCKENBETÄTIGTE VORRICHTUNG ZUR STEUERUNG VON ZUMINDEST EINER KOMPONENTE
CAM-OPERATED DEVICE FOR CONTROLLING AT LEAST ONE COMPONENT

(30) Priorité: 27.01.2015 FR 1550626
(43) Date de publication de la demande: 10.01.2018
(73) Titulaire: Valeo Systemes Thermiques, 78320 Le Mesnil Saint Denis (FR)
(72) Inventeur: DUBOIS, Christian, 78322 Le Mesnil Saint-Denis cédex (FR)
(74) Mandataire: Metz, Gaëlle
(86) Numéro de dépôt international: PCT/EP2016/050853
(87) Numéro de publication internationale: WO 2016/120102

(56) Documents cités:
- FR-A1- 2 335 753
- FR-A1- 2 757 240

## Description

La présente invention concerne un dispositif à came pour la commande d'au moins un organe, un système de manoeuvre d'au moins une pièce mobile comprenant ledit dispositif à came et un appareil de chauffage, ventilation et/ou climatisation, notamment pour véhicules automobiles, comprenant un tel système de manoeuvre.

Un véhicule automobile est couramment équipé d'une installation de traitement thermique d'un flux d'air, également appelée installation de chauffage, ventilation et/ou climatisation, pour modifier les paramètres aérothermiques d'un flux d'air destiné à être distribué à l'intérieur d'un habitacle du véhicule. A cet effet, l'installation de chauffage, ventilation et/ou climatisation comprend un appareil de chauffage, ventilation et/ou climatisation destiné à canaliser le flux d'air préalablement à sa distribution à l'intérieur de l'habitacle. L'appareil de chauffage, ventilation et/ou climatisation est préférentiellement logé sous une planche de bord du véhicule disposée dans la partie avant de l'habitacle du véhicule. L'appareil de chauffage, ventilation et/ou climatisation comprend généralement un boîtier d'entrée d'air et un boîtier de traitement thermique.

Le boîtier de traitement thermique comprend divers composants de traitement thermique du flux d'air parmi lesquels on peut distinguer, d'une part, des échangeurs de chaleur, tels qu'un évaporateur et/ou un radiateur, destinés au traitement thermique du flux d'air, en particulier en permettant de le refroidir et/ou de le déshumidifier et/ou de le réchauffer, et, d'autre part, des moyens de gestion aéraulique, tel qu'un pulseur, permettant de canaliser le flux d'air et de le distribuer dans diverses zones de l'habitacle.

Les moyens de distribution installés dans le boîtier de traitement thermique répartissent le flux d'air sortant d'une chambre de mixage, situés en aval des échangeurs, entre différents conduits d'air débouchant dans diverses zones de l'habitacle, notamment la zone du pare-brise pour le dégivrage, la zone centrale de la planche de bord pour la ventilation de l'habitacle et la zone des pieds des passagers avant du véhicule, chaque conduit d'air pouvant être fermé ou ouvert par un volet actionné par un levier.

Il est bien connu que ces appareils de chauffage, ventilation et/ou climatisation de véhicules automobiles, dits HVAC selon l'acronyme anglo-saxon « Heating, Ventilation and Air-Conditioning », font couramment appel à des cames pour déplacer un ou plusieurs leviers de manière synchronisée et/ou pour suivre une loi de mouvement particulière afin d'ouvrir et fermer un conduit d'air par l'intermédiaire de clapets ou volets des moyens de distribution.

Ces cames sont accouplées à un axe de rotation apte à effectuer un mouvement rotatif de va-et-vient correspondant au mouvement alternatif désiré d'ouverture et de fermeture desdits clapets ou volets. L'axe de rotation de la came peut être actionné au moyen d'un moteur électrique, ou bien manuellement par l'intermédiaire d'un câble.

Lesdites cames comportent un chemin de came périmétrique défini entre une paroi extérieure et une paroi intérieure, le chemin de came s'éloignant plus ou moins de l'axe de rotation entre ses deux extrémités distales. Il est de la sorte possible de modifier le positionnement de suiveurs de came susceptibles de glisser dans le chemin de came.

Un tel dispositif à came est notamment décrit dans le document FR 2 335 753. Ce dernier présente un dispositif de manoeuvre pour un organe de transmission tel que câble de tirage ou timonerie, dans les véhicules automobiles, qui est articulé sur un levier supporté à rotation et présentant un tourillon engagé dans un chemin de came pratiqué dans une came rotative. Ladite came présente une forme de disque et comporte un chemin de came en forme de spirale sur chacune de ces faces. Les chemins de came sont disposés tête bêche dans l'épaisseur de la came. Le document FR 2 757 240 A1 présente toutes les caractéristiques du préambule de la revendication 1.

Bien qu'intéressant car permettant de guider plusieurs suiveurs de came par l'intermédiaire de leurs différentes faces, ce type de dispositif à came présente un encombrement important dans la direction de l'axe de rotation de la came.

L'invention vise à améliorer la situation en proposant un dispositif à came pour la commande d'au moins un organe, ledit dispositif comprenant une came comportant au moins un premier chemin de came sur une première face et un deuxième chemin de came sur une face opposée, ledit premier chemin de came présentant une profondeur, mesurée à partir d'une ouverture, au niveau de ladite première face, dudit premier chemin de came, et ledit deuxième chemin de came présentant une profondeur, mesurée à partir d'une ouverture, au niveau de ladite face opposée, dudit deuxième chemin de came, une hauteur de la came entre l'ouverture des premier et deuxième chemins de came étant inférieure à la somme des profondeurs des chemins de came.

Le dispositif à came suivant l'invention procure de la sorte une interpénétration des chemins de came des faces opposées de la came, ce qui permet de réduire de manière significative l'épaisseur de la came et, par suite, son encombrement.

Selon différents modes de réalisation de l'invention, pris ensemble ou séparément :
- chaque chemin de came présente une section droite rectangulaire ou carré,
- l'un au moins des chemins de came de la première face de la came est sécant avec l'un au moins des chemins de came de la face opposée de ladite came, lesdits chemins étant dits coupés,
- le ou les chemins de came coupés de la première face de la came débouchent sur le ou les chemins de came coupés de la face opposée de ladite came sur une hauteur inférieure à la profondeur du ou desdits chemins de came coupés de la face opposée de ladite came,
- la came comprend un axe de rotation central,
- la came présente une forme de disque,
- chaque chemin de came présente une profondeur différente.

L'invention concerne aussi un système de manoeuvre d'au moins une pièce mobile, ledit système comprenant un dispositif à came tel qu'évoqué plus haut.

Selon différents modes de réalisation, ledit système pourra présenter les caractéristiques complémentaires suivantes, prises ensemble ou séparément :
- ledit système comprend au moins un levier entraîné par le mouvement de la came et dont l'une des extrémités comporte un galet suiveur apte à glisser dans l'un desdits chemins de came, ledit levier étant configuré pour actionner ladite pièce mobile,
- ledit galet suiveur présente une hauteur inférieure à la profondeur du chemin de came correspondant,
- le galet suiveur prend localement appui sur une paroi interne du chemin de came sur une profondeur inférieure ou égale à 50%, voire à 1/5 de la profondeur dudit chemin de came.

L'invention concerne encore une installation de chauffage, ventilation et/ou climatisation comprenant un système de manoeuvre tel que décrit plus haut. Avantageusement, ladite pièce mobile est un volet de ladite installation, en particulier un volet de distribution.

Toutefois, cette application de l'invention n'est pas limitative et il va de soi que le dispositif à came selon l'invention trouvera de nombreuses applications, que la came soit rotative ou translative, sans pour autant sortir du cadre de l'invention.

L'invention sera mieux comprise à la lumière de la description suivante qui n'est donnée qu'à titre indicatif et qui n'a pas pour but de la limiter, accompagnée des dessins joints parmi lesquels :
- la figure 1 est une vue en perspective du dispositif à came suivant l'invention pour la manoeuvre de volets de distribution d'un appareil de chauffage, ventilation et/ou climatisation d'un véhicule automobile,
- la figure 2 est une vue en perspective de dessous du dispositif à came suivant l'invention, muni de leviers de commande des volets,
- la figure 3 est une vue en perspective de dessus du dispositif à came suivant l'invention, muni des leviers de commande des volets,
- la figure 4 est une vue en perspective d'une coupe radiale du dispositif à came suivant l'invention, muni des leviers de commande des volets,
- la figure 5 est une autre vue en perspective de dessus du dispositif à came suivant l'invention, sans les leviers de commande des volets,
- la figure 6 est une autre vue en perspective de dessous du dispositif à came suivant l'invention, sans les leviers de commande des volets,
- la figure 7 est une autre vue en perspective d'une coupe radiale du dispositif à came suivant l'invention, sans les leviers de commande des volets.

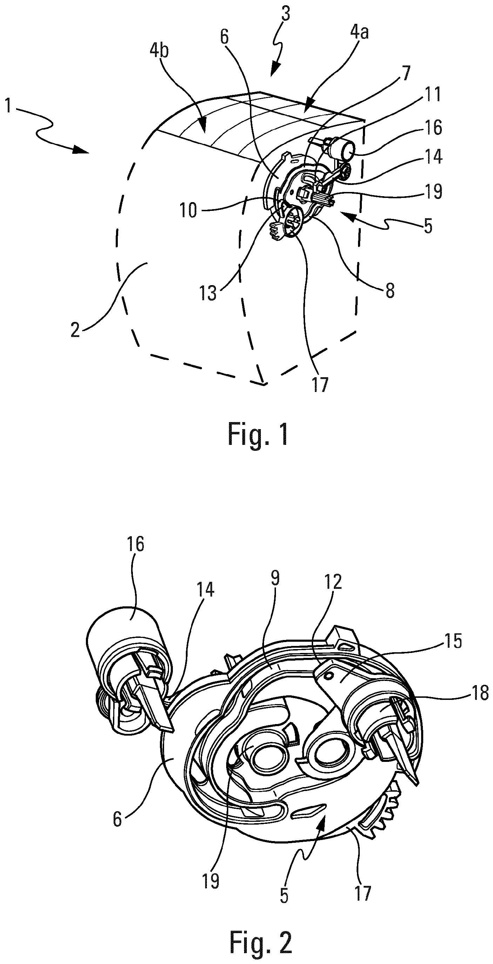

En référence à la figure 1, le dispositif à came suivant l'invention est intégré, dans cet exemple particulier, dans un dispositif de commande d'un appareil de chauffage, ventilation et/ou climatisation 1 de véhicules automobiles dit HVAC, destiné à être situé dans la partie avant de l'habitacle d'un véhicule, non représenté sur la figure, et logé sous une planche de bord du véhicule, également non représentée.

Ledit appareil de chauffage, ventilation et/ou climatisation 1 comporte un boîtier de traitement thermique 2. Seule une face supérieure dudit boîtier 2 a été illustrée, le reste du boîtier ayant été uniquement représenté, en pointillés, par son contour.

Ledit boîtier 2 comprend divers composants de traitement thermique du flux d'air tels qu'un évaporateur et/ou un radiateur, non visibles, destinés au traitement thermique du flux d'air, en particulier en permettant de le refroidir et/ou de le déshumidifier et/ou de le réchauffer, et, des moyens de gestion aéraulique 3, permettant de canaliser le flux d'air et de le distribuer dans diverses zones de l'habitacle, telles que la zone du pare-brise, la zone des pieds et la zone centrale.

A cet effet, les moyens de gestion aéraulique 3 comportent plusieurs bouches, connectées à des conduites alimentant respectivement la zone du pare-brise, bouche 4a, la zone des pieds, bouche non illustrée, et la zone centrale, bouche 4c. Lesdites bouches sont munies de volets, non représentés sur la figure 1, pilotées par un dispositif à came 5.

En référence aux figures 1 à 4, le dispositif à came 5 est constitué d'une came 6 présentant ici une forme générale de disque et munie sur une première de ses faces, en l'espèce sa face extérieure, de deux chemins de came 7 et 8 et sur sa face opposée, c'est-à-dire sa face faisant face au boitier de traitement thermique 2, d'un chemin de came 9. Ladite came est formée, par exemple, par moulage, notamment d'un matériau en matière plastique.

Chaque chemin de came 7, 8 et 9 reçoit un galet suiveur 10, 11 et respectivement 12, solidaire de l'une des extrémités d'un levier 13, 14 et respectivement 15, l'extrémité opposée de chaque levier étant solidaire d'un organe d'actionnement 16, 17 et respectivement 18 d'un volet des moyens de gestion aéraulique 3, ceci par l'intermédiaire d'éventuels organes de renvoi.

Il va de soi que les galets suiveurs 10, 11 et respectivement 12 pourront être substitués par tout autre moyen équivalent bien connu de l'homme du métier sans pour autant sortir du cadre de l'invention.

Ladite came 6 comporte dans sa partie centrale un axe de rotation 19 afin d'assurer la rotation de ladite came par rapport au boîtier de traitement thermique 2. La rotation de la came autour de son axe de rotation 19 détermine sa position angulaire, et par suite, la position des galets suiveur 10, 11, 12, le long de leur chemin de came respectif 7, 8 et 9. Les chemins de came 7, 8 et 9 présentent une trajectoire permettant aux galets suiveur 10, 11, 12, de s'éloigner plus ou moins de l'axe de rotation 19. Ils agissent de la sorte sur le positionnement des volets auxquels ils sont reliés.

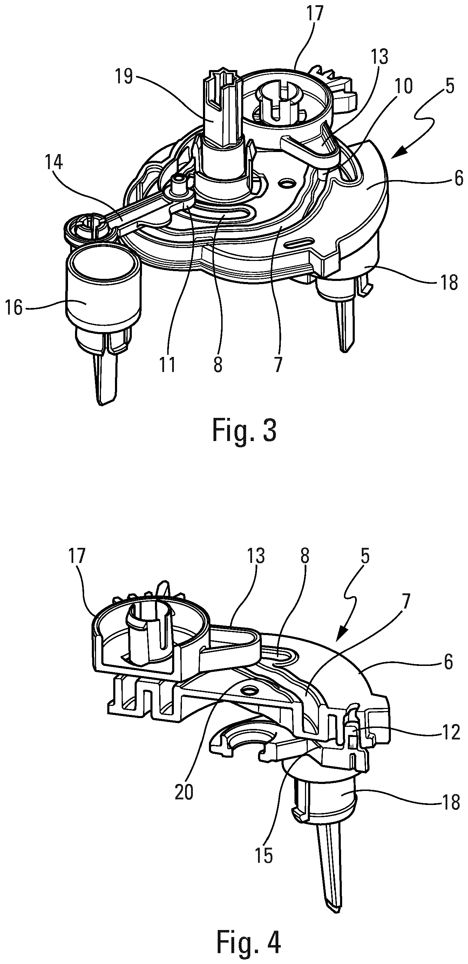

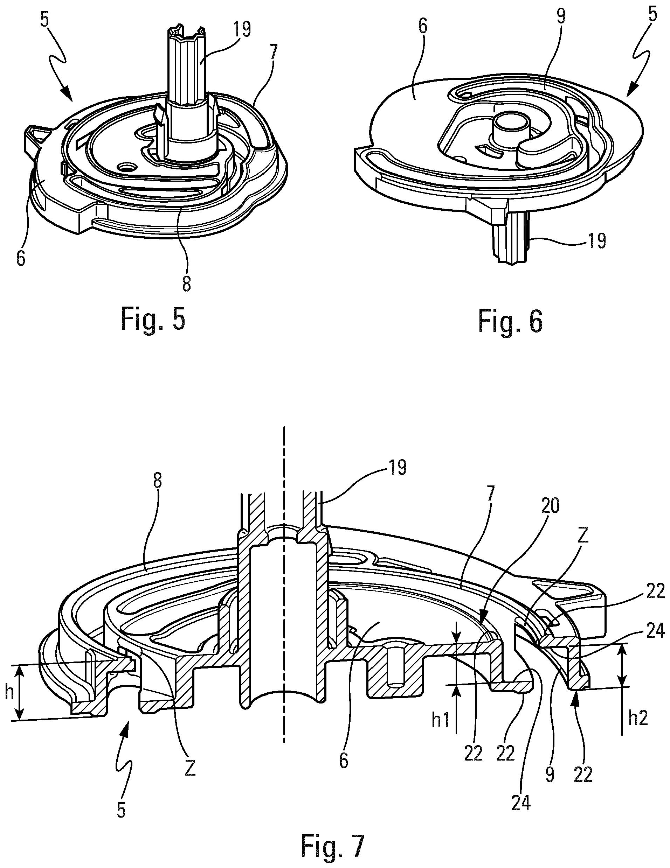

En référence aux figures 4 et 7, chaque chemin de came 7, 8 et 9 présente une section droite sensiblement rectangulaire ou carrée et une profondeur h1 et h2 tout juste inférieure à la hauteur h du disque formant la came 6. Ainsi, la hauteur h de la came 6 est inférieure à la somme des profondeurs (h1+h2) des chemins de came 7, 8 et 9 des deux faces opposées de ladite came 6, la hauteur h étant mesurée entre l'ouverture des chemins de cames 7, 8 et 9 sur la face au niveau de laquelle ils débouchent. Autrement dit, les chemins de came 7, 8 et 9 sont imbriqués dans l'épaisseur de la came plutôt que de se trouver l'un dans une première moitié axiale de l'épaisseur de la came et l'autre dans l'autre moitié axiale de l'épaisseur de la came.

Ici, les faces de la came présentent une lèvre 20 longeant les chemins de came 7, 8 et 9 et l'ouverture des chemins de cames est considérée comme étant situé au niveau d'un bord supérieur 22 de cette lèvre 20 de sorte que la profondeur des cames est mesurée entre ledit bord supérieur 22 et un fond 24, prévu plat, du chemin de came. Quant à l'épaisseur de la came, elle est mesurée entre le bord supérieur 22 des lèvres des chemins de came se trouvant sur chacune des faces opposées de la came.

En variante, la lèvre pourra ne pas être présente et la profondeur des chemins de came sera alors mesurée depuis la surface d'extension générale des faces correspondantes de la came. De même, l'épaisseur de la came sera mesurée entre les surfaces d'extension générales des faces opposées de la came. En variante toujours, le fond de la came pourra ne pas être plat et la profondeur de la came sera alors mesurée, par exemple, par rapport au point le plus profond. On notera que les profondeurs h1 et h2 des chemins de came 7, 8 et 9 pourront être égales ou différentes.

Les galets suiveurs 10, 11 et 12 prennent appui sur l'une ou l'autre des parois latérales des chemins de came, dite paroi interne du chemin de came 7, 8 et 9 sur une profondeur inférieure à la profondeur h1 ou h2 dudit chemin de came 7, 8 et 9. De préférence, la profondeur d'appui des galets suiveurs 10, 11 et 12 est comprise entre 1 et 5 mm. Elle s'étend depuis l'ouverture des chemins de came 7, 8 et 9 en direction du fond de ceux-ci.

En référence aux figures 5 à 7, les chemins de came 7, 8 de la face extérieure de la came 6 débouchent sur le chemin de came 9 de la face opposée de ladite came 6 sur une hauteur inférieure à la profondeur h1, h2 des chemins de came. Autrement dit, le ou les chemins de cames de l'une des faces pourra croiser le ou les chemins de came de la face opposée. Lesdits chemins de came 7, 8 présentent ici de la sorte, localement, des fenêtres de passage du galet suiveur du chemin de came 9 de la face opposée de la came, et inversement, lesdites fenêtres étant situées au niveau de leurs parois internes. Pour éviter tout blocage, la position angulaire des galets suiveur sera prévu afin que deux galets suiveurs ne se trouvent pas simultanément au même moment au niveau d'un croisement.

Préférentiellement, au niveau desdits croisements, le ou les chemins de came débouchent l'un sur l'autre sur une hauteur inférieure à leur profondeur de sorte qu'il reste une fraction de profondeur Z d'appui des galets suiveurs au niveau de leur face interne. Ladite fraction de profondeur Z s'étend depuis l'ouverture des chemins de came 7, 8 et 9, par exemple sur une hauteur inférieure à 50%, voire à 1/5 de la profondeur desdits chemins de came 7, 8 et 9.

Ladite came pourra en outre comporter une ou des puits d'articulation de différents axes, notamment d'axes d'articulation des organes d'actionnement.

Il est bien évident que le dispositif à came suivant l'invention pourra comporter une came guidée en translation et non pas en rotation sans pour autant sortir du cadre de l'invention.

Enfin, il est bien évident que le dispositif à came suivant l'invention pourra être adapté à tous les types de commande d'un organe ainsi qu'à tout type d'organe. De même, les exemples de réalisation donnés plus haut ne sont que des illustrations particulières en aucun cas limitatives quant aux domaines d'application de l'invention.

## Revendications

1. Dispositif à came (5) pour la commande d'au moins un organe, ledit dispositif (5) comprenant une came (6) comportant au moins un premier chemin de came (7, 8) sur une première face et un deuxième chemin de came (9) sur une face opposée, ledit premier chemin de came (7, 8) présentant une profondeur (h1), mesurée à partir d'une ouverture, au niveau de ladite première face, dudit premier chemin de came (7, 8), et ledit deuxième chemin de came (9) présentant une profondeur (h2), mesurée à partir d'une ouverture, au niveau de ladite face opposée, dudit deuxième chemin de came (9), caractérisé en ce q'une hauteur (h) de la came (6), mesurée entre l'ouverture des premier et deuxième chemins de came (7, 8, 9), est inférieure à la somme des profondeurs (h1, h2) des chemins de came (7, 8, 9).

2. Dispositif à came (5) suivant la revendication 1 dans lequel chaque chemin de came (7, 8, 9) présente une section droite rectangulaire ou carrée.

3. Dispositif à came (5) suivant l'une quelconque des revendications 1 ou 2 dans lequel l'un au moins des chemins de came (7, 8) de la première face de la came (6) est sécant avec l'un au moins des chemins de came (9) de la face opposée de ladite came (6), lesdits chemins étant dits coupés.

4. Dispositif à came (5) suivant la revendication 3 dans lequel le ou les chemins de came (7, 8) coupés de la première face de la came (6) débouchent sur le ou les chemins de came (9) coupés de la face opposée de ladite came (6) sur une hauteur inférieure à la profondeur du ou des chemins de came (9) coupés de la face opposée de ladite came (6).

5. Dispositif à came (5) suivant l'une quelconque des revendications 1 à 4 dans lequel la came (6) comprend un axe (19) de rotation central.

6. Dispositif à came (5) suivant la revendication 5 dans lequel la came (6) présente une forme de disque.

7. Dispositif à came (5) suivant l'une quelconque des revendications 1 à 6 dans lequel chaque chemin de came (7, 8, 9) présente une profondeur différente.

8. Système de manoeuvre d'au moins une pièce mobile, ledit système comprenant le dispositif à came (5) selon l'une quelconque des revendications précédentes et au moins un levier (13, 14, 15) entraîné par le mouvement de la came (6) et dont l'une des extrémités comporte un galet suiveur (10, 11, 12) apte à glisser dans l'un desdits chemins de came (7, 8, 9), ledit levier (13, 14, 15) étant configuré pour actionner ladite pièce mobile.

9. Système de manoeuvre selon la revendication 8 dans lequel ledit galet suiveur (10, 11, 12) présente une hauteur inférieure à la profondeur du chemin de came (7, 8, 9) correspondant.

10. Système de manoeuvre suivant l'une quelconque des revendications 8 ou 9 dans lequel le galet suiveur (10, 11, 12) prend localement appui sur une paroi interne du chemin de came (7, 8, 9) sur une profondeur inférieure ou égale à 1/5 de la profondeur dudit chemin de came (7, 8, 9).

11. Installation de chauffage, ventilation et/ou climatisation comprenant un système de manoeuvre selon l'une quelconque revendications 8 ou 9 ou 10.

12. Installation selon la revendication 11 dans lequel ladite pièce mobile est un volet de ladite installation, en particulier un volet de distribution.

## Patentansprüche

1. Nockenvorrichtung (5) zum Steuern von mindestens einem Organ, wobei die Vorrichtung (5) einen Nocken (6) aufweist, der mindestens eine erste Nockenbahn (7, 8) auf einer ersten Seite und eine zweite Nockenbahn (9) auf einer gegenüberliegenden Seite aufweist, wobei die erste Nockenbahn (7, 8) eine Tiefe (h1) aufweist, die ab einer Öffnung an der ersten Seite der ersten Nockenbahn (7, 8) gemessen ist, und wobei die zweite Nockenbahn (9) eine Tiefe (h2) aufweist, die ab einer Öffnung an der gegenüberliegenden Seite der zweiten Nockenbahn (9) gemessen ist, **dadurch gekennzeichnet, dass** eine Höhe (h) des Nocken (6), die zwischen der Öffnung der ersten und der zweiten Nockenbahn (7, 8, 9) gemessen ist, niedriger als die Summe der Tiefen (h1, h2) der Nockenbahnen (7, 8, 9) ist.

2. Nockenvorrichtung (5) nach Anspruch 1, wobei jede Nockenbahn (7, 8, 9) einen quadratischen oder rechteckigen Querschnitt aufweist.

3. Nockenvorrichtung (5) nach einem der Ansprüche 1 oder 2, wobei sich die mindestens eine der Nockenbahnen (7, 8) der ersten Seite des Nocken (6) mit der mindestens einen der Nockenbahnen (9) der gegenüberliegenden Seite des Nocken (6) schneidet, wobei die Bahnen sogenannte durchtrennte Bahnen sind.

4. Nockenvorrichtung (5) nach Anspruch 3, wobei die durchtrennte Nockenbahn oder die durchtrennten Nockenbahnen (7, 8) der ersten Seite des Nocken (6) auf der durchtrennten Nockenbahn oder den durchtrennten Nockenbahnen (9) der gegenüberliegenden Seite des Nocken (6) auf einer Höhe mündet oder münden, die niedriger als die Tiefe der durchtrennten Nockenbahn oder Nockenbahnen (9) der gegenüberliegenden Seite des Nocken (6) ist.

5. Nockenvorrichtung (5) nach einem der Ansprüche 1 bis 4, wobei der Nocken (6) eine zentrale Drehachse (19) aufweist.

6. Nockenvorrichtung (5) nach Anspruch 5, wobei der Nocken (6) eine Scheibenform aufweist.

7. Nockenvorrichtung (5) nach einem der Ansprüche 1 bis 6, wobei jede Nockenbahn (7, 8, 9) eine unterschiedliche Tiefe aufweist.

8. System zum Betätigen mindestens eines beweglichen Teils, wobei das System eine Nockenvorrichtung (5) nach einem der vorhergehenden Ansprüche und mindestens einen Hebel (13, 14, 15) aufweist, der von der Bewegung des Nocken (6) angetrieben wird und wovon eines der Enden einen Nockenfolger (10, 11, 12) aufweist, der geeignet ist, in einer der Nockenbahnen (7, 8, 9) zu gleiten, wobei der Hebel (13, 14, 15) konfiguriert ist, um en beweglichen Teil zu betätigen.

9. System zum Betätigen nach Anspruch 8, wobei der Nockenfolger (10, 11, 12) eine Höhe aufweist, die niedriger als die Tiefe der entsprechenden Nockenbahn (7, 8, 9) ist.

10. System zum Betätigen nach einem der Ansprüche 8 oder 9, wobei der Nockenfolger (10, 11, 12) örtlich auf einer Innenwand der Nockenbahn (7, 8, 9) auf einer Tiefe aufliegt, die niedriger als oder gleich 1/5 der Tiefe der Nockenbahn (7, 8, 9) ist.

11. Heizungs-, Lüftungs- und/oder Klimaanlage, umfassend ein System zum Betätigen nach einem der Ansprüche 8 oder 9 oder 10.

12. Anlage nach Anspruch 11, wobei der bewegliche Teil eine Klappe der Anlage, insbesondere eine Verteilerklappe ist.

## Claims

1. Cam-operated device (5) for controlling at least one component, said device (5) comprising a cam (6) comprising at least one first camway (7, 8) on a first face and a second camway (9) on an opposite face, said first camway (7, 8) having a depth (h1), measured from an opening, at the level of said first face, of said first camway (7, 8), and said second camway (9) having a depth (h2), measured from an opening, at the level of said opposite face, of said second camway (9), **characterized in that** a height (h) of the cam (6), measured between the opening of the first and second camways (7, 8, 9), is less than the sum of the depths (h1, h2) of the camways (7, 8, 9).

2. Cam-operated device (5) according to Claim 1, in which each camway (7, 8, 9) has a rectangular or square cross section.

3. Cam-operated device (5) according to either one of Claims 1 and 2, in which at least one of the camways (7, 8) of the first face of the cam (6) is secant with at least one of the camways (9) of the opposite face of said cam (6), said camways being referred to as interrupted.

4. Cam-operated device (5) according to Claim 3, in which the interrupted camway(s) (7, 8) of the first face of the cam (6) open onto the interrupted camway(s) (9) of the opposite face of said cam (6) over a height which is less than the depth of the interrupted camway(s) (9) of the opposite face of said cam (6).

5. Cam-operated device (5) according to any one of Claims 1 to 4, in which the cam (6) comprises a central rotary shaft (19).

6. Cam-operated device (5) according to Claim 5, in which the cam (6) has a disk shape.

7. Cam-operated device (5) according to any one of Claims 1 to 6, in which each camway (7, 8, 9) has a different depth.

8. System for operating at least one movable part, said system comprising the cam-operated device (5) according to any one of the preceding claims and at least one lever (13, 14, 15) driven by the movement of the cam (6) and one of whose ends comprises a follower roller (10, 11, 12) able to slide in one of said camways (7, 8, 9), said lever (13, 14, 15) being configured to actuate said movable part.

9. Operating system according to Claim 8, in which said follower roller (10, 11, 12) has a height which is less than the depth of the corresponding camway (7, 8, 9).

10. Operating system according to either one of Claims 8 and 9, in which the follower roller (10, 11, 12) bears locally on an inner wall of the camway (7, 8, 9) over a depth which is less than or equal to 1/5 of the depth of said camway (7, 8, 9).

11. Heating, ventilation and/or air-conditioning installation comprising an operating system according to any one of Claims 8 or 9 or 10.

12. Installation according to Claim 11, in which said movable part is a flap of said installation, in particular a distribution flap.
